# EUROPÄISCHE PATENTANMELDUNG

(11) **EP 4 019 186 A1**
(43) Veröffentlichungstag der Anmeldung: **29.06.2022**
(21) Anmeldenummer: 21216258.0
(22) Anmeldetag: 21.12.2021
(51) Int. Cl.: B23Q 1/00, B27C 9/00, B23B 29/034, B27M 1/08

(54) **BEARBEITUNGSVORRICHTUNG,INSBESONDERE HOLZBEARBEITUNGSVORRICHTUNG**

(30) Priorität: 23.12.2020 DE 102020134897
(71) Anmelder: IMA Schelling Deutschland GmbH, 32312 Lübbecke (DE)
(72) Erfinder: Jeroch, Jens, 31749 Auetal (DE)
(74) Vertreter: Schober, Mirko

(57) **Zusammenfassung**

Die Bearbeitungsvorrichtung (1), insbesondere Holzbearbeitungsvorrichtung, weist eine Motorspindel (20) mit einer Schnittstelle (21) zur Aufnahme von Wechselaggregaten (30) zur Durchführung einer Bearbeitung, eine Wechselvorrichtung (10) mit wenigstens einem Aufnahmeplatz (12) zur Aufnahme von während der Bearbeitung nicht verwendeten Wechselaggregaten (30) und wenigstens ein Wechselaggregat (30) oder eine Mehrzahl Wechselaggregate (30) auf. Jedes Wechselaggregat (30) umfasst eine Schnittstelle (31) zur Ankopplung an die Schnittstelle (21) der Motorspindel (20) sowie ein über die Motorspindel (20) anzutreibendes Werkzeug, insbesondere einen Fräskopf. Das wenigstens eine Wechselaggregat (30) weist wenigstens einen Akku auf, der elektrisch mit mindestens einem am Wechselaggregat (3) angeordneten Antrieb, der Tast- oder Zustellbewegungen des Wechselaggregats (30) antreibt, verbunden ist und diesen mit Spannung versorgt. Die Wechselvorrichtung (10) weist weiter wenigstens eine Ladevorrichtung (14) auf, mit der der Akku wenigstens eines, insbesondere an einem Aufnahmeplatz (12) aufgenommenen, Wechselaggregats (30) geladen werden kann.

## Beschreibung

Die Erfindung betrifft eine Bearbeitungsvorrichtung, insbesondere Holzbearbeitungsvorrichtung nach dem Oberbegriff des Anspruchs 1.

Bei der Holzbearbeitung werden häufig an Motorspindeln über eine Schnittstelle Wechselaggregate angeordnet, an denen wiederum Werkzeuge angeordnet sind. Während ein Werkzeug über den Antrieb der Motorspindel betätigt wird, sind gelegentlich auch noch Tast- oder Zustellbewegungen, im Wesentlichen Linearbewegungen, am Wechselaggregat durchzuführen. Dazu besitzt das Wechselaggregat wenigstens einen Antrieb, der für die Durchführung solcher Bewegungen mit Energie zu versorgen ist. Naturgemäß lässt sich dies nicht durch den Spindelantrieb der Motorspindel selbst bewerkstelligen. In der Vergangenheit ist gelegentlich versucht worden, über berührungslose Energieübertragung aus einer Datenschnittstelle der Motorspindel Antriebsenergie für den am Wechselaggregat angeordneten Antrieb für die durchzuführenden Tast- oder Zustellbewegungen zu gewinnen. Dies hat sich allerdings als unzureichend erwiesen, weil ein entsprechender am Wechselaggregat vorgesehener Antrieb, manchmal auch eine Mehrzahl Antriebe, eine höhere Leistungsaufnahme hat als dies über Datenschnittstellen zur Verfügung gestellt werden kann.

Aufgabe der vorliegenden Erfindung ist es daher, die eingangs genannte Bearbeitungsvorrichtung dahingehend weiterzuentwickeln, dass die erwähnten Nachteile bisheriger Lösungen vermieden werden.

Gelöst wird diese Aufgabe durch eine Bearbeitungsvorrichtung mit den Merkmalen des Anspruchs 1.

Die Erfindung löst die genannte Aufgabe dadurch, dass die Wechselaggregate mit einem Akku ausgestattet sind, der geeignet ist, genügend Energie zur Verfügung zu stellen, um am Wechselaggregat vorgesehene Antriebe für Tast- oder Zustellbewegungen des Wechselaggregats mit der erforderlichen Energie zu versorgen. In einer Wechselvorrichtung können dazu mehrere Wechselaggregate vorgesehen werden, deren Akkus in der Wechselvorrichtung aufgeladen werden können, so steht beim Ankoppeln eines Wechselaggregats an die Motorspindel immer ausreichend Energie zur Verfügung.

Die erfindungsgemäße Bearbeitungsvorrichtung, bei der es sich insbesondere um eine Holzbearbeitungsvorrichtung handeln kann, weist hierzu eine Motorspindel mit einer Schnittstelle auf. Diese dient der Aufnahme von Wechselaggregaten, die ein Werkzeug aufweisen, welches durch die Motorspindel während der Bearbeitung betätigt wird. Ferner weist die erfindungsgemäße Vorrichtung eine Wechselvorrichtung mit wenigstens einem Aufnahmeplatz zur Aufnahme von während der Bearbeitung nicht verwendeten Wechselaggregaten auf. Darüber hinaus verfügt die Bearbeitungsvorrichtung über wenigstens ein Wechselaggregat oder eine Mehrzahl Wechselaggregate. Jedes dieser Wechselaggregate umfasst dabei eine Schnittstelle zur Ankopplung an die Schnittstelle der Motorspindel sowie ein über die Motorspindel anzutreibendes Werkzeug, wobei es sich insbesondere um einen Fräskopf handeln kann.

Erfindungsgemäß ist dabei vorgesehen, dass das wenigstens eine Wechselaggregat wenigstens einen Akku aufweist, der elektrisch mit mindestens einem Antrieb verbunden ist und diesen mit Spannung versorgt. Dieser am Wechselaggregat angeordnete Antrieb treibt die Tast- oder Zustellbewegungen des Wechselaggregats an. Weiterhin weist die Wechselvorrichtung wenigstens eine Ladevorrichtung auf, mit der der Akku wenigstens eines, insbesondere an einem Aufnahmeplatz aufgenommenen, Wechselaggregats, geladen werden kann. Insbesondere kann nach dem Rückwechsel des Wechselaggregats in den Werkzeugwechsler nach dessen Gebrauch der Akku permanent aufgeladen werden, so dass er über die gesamte Betriebszeit der Bearbeitungsvorrichtung betriebsbereit ist und das entsprechende Aggregat jederzeit zum Einsatz kommt.

Durch den Einsatz von Akkus - es kann auch eine Mehrzahl Akkus an einem Wechselaggregat angeordnet sein - kann so hinreichend Leistung durch den Akku zur Verfügung gestellt werden, um das Wechselaggregat zu betreiben, d. h. die Tast- oder Zustellbewegungen des Wechselaggregats anzutreiben. Insbesondere können auch Wechselaggregate mit einer Mehrzahl Antriebe (z. B. Elektromotoren) an einem Wechselaggregat auf diese Weise mit ausreichend Leistung versorgt werden. Oft werden an einem Wechselaggregat zwei oder drei Motoren gleichzeitig verstellt, wenn das Wechselaggregat beispielsweise ein oberes erstes und unteres zweites Werkzeug aufweist, welche relativ zueinander zu verstellen sind und diese über eine Tastung einem Werkstück zugestellt werden müssen.

Grundsätzlich kann die Wechselvorrichtung beliebig ausgebildet sein. Bevorzugt kann die Wechselvorrichtung als Revolver, Tellerwechsler, Kettenwechsler oder Pick-Up-Wechsler ausgebildet sein. Die Wechselvorrichtung ist mit einer Mehrzahl daran angeordneter Aufnahmeplätze für Wechselaggregate ausgebildet. Im Falle der Ausbildung als Revolver weist die Wechselvorrichtung eine drehbare Revolverscheibe auf, an welcher die Aufnahmeplätze vorgesehen sind.

Soll ein bestimmtes Wechselaggregat zum Einsatz kommen, wird dieses in der Wechselvorrichtung in eine Übergabeposition verbracht bzw. gedreht. Dazu weist die Wechselvorrichtung bevorzugt einen Übergabebereich auf, zu dem jeder Aufnahmeplatz der Wechselvorrichtung bewegbar ist, um ein Wechselaggregat zur Aufnahme an die Motorspindel zu übergeben oder zur Aufnahme von der Motorspindel zu übernehmen. Die Motorspindel fährt beispielsweise zur Übergabe aus einer Bearbeitungsposition in eine Wechselposition an die Wechselvorrichtung heran und übernimmt das Wechselaggregat aus der Wechselvorrichtung. Nach erfolgter Übernahme wird die Motorspindel in die nächste Bearbeitungsposition gefahren und das Werkzeug des Wechselaggregats wird durch die angekoppelte Motorspindel angetrieben.

Nach einer bevorzugten Ausführungsform der erfindungsgemäßen Bearbeitungsvorrichtung kann vorgesehen sein, dass das Bearbeitungsaggregat eine elektrische Schalteinrichtung, insbesondere Schaltbox, aufweist, in die der wenigstens eine Akku und/oder die den Akku mit dem wenigstens einen Antrieb verbindende Elektrik und/oder Elektronik angeordnet ist. Natürlich kann der Akku auch an einer anderen Stelle am Wechselaggregat vorgesehen sein. Es empfiehlt sich jedoch, eine Schaltbox oder dergleichen zu verwenden, da diese ein Gehäuse aufweist, in der sowohl der Akku als auch die darin untergebrachte Elektronik bzw. Elektrik geschützt sind. Im Zweifel muss allerdings an einem solchen Gehäuse ein Ladeanschluss oder dergleichen vorgesehen sein, welcher mit der Ladeeinrichtung kommuniziert, damit der Akku bei Bedarf aufgeladen werden kann.

Die Aufladung kann an unterschiedlichen Stellen erfolgen. Natürlich an der Wechselvorrichtung selber, an der die entsprechenden Aufnahmeplätze für die Wechselaggregate angeordnet sind. So können die Akkus von benutzten Wechselaggregaten während der Zeit, in der sie nicht benutzt werden, aufgeladen werden. Alternativ oder ergänzend kann nach einer weiteren bevorzugten Ausführungsform die oder eine weitere Ladevorrichtung nämlich auch so angeordnet sein, dass sie den Akku eines an der Motorspindel aufgenommenen Wechselaggregates, insbesondere während des Betriebs des Wechselaggregats, bevorzugt durch Induktion oder einen Schleifkontakt, lädt. So ist es möglich, auch während des Betriebs an der Motorspindel den Akku weiter aufzuladen.

Vorteilhaft ist auch eine Ausführung, bei der die Wechselvorrichtung eine Mehrzahl Ladevorrichtungen zum Laden der Akkus einer Mehrzahl an der Wechselvorrichtung aufgenommener Wechselaggregate umfasst. Auf diese Weise wird sichergestellt, dass nicht lediglich der Akku eines gerade von der Motorspindel an die Wechselvorrichtung übergebenen Wechselaggregats geladen wird, sondern auch weitere Wechselaggregate, die in der Zukunft an der Motorspindel zum Einsatz kommen sollen.

Vorteilhafterweise kann vorgesehen sein, dass die Bearbeitungsvorrichtung eine Erfassungseinrichtung umfasst, welche bestimmt, ob der wenigstens eine Akku einen vorgegebenen Ladezustand aufweist. Dabei kann es sich um eine einfache Anzeige handeln, es kann aber auch eine Signaleinrichtung sein, die dann den Bearbeitungsvorgang an der Motorspindel beendet und die Motorspindel beispielsweise in die Übergabestellung fährt, um ein entsprechendes Wechselaggregat mit einem aufgeladenen Akku zu übernehmen.

Praktischerweise wird jeder Akku in der Wechselvorrichtung vor dem ersten Betrieb an der Motorspindel bzw. dessen Übergabe dahin, einmal - bevorzugt vollständig - aufgeladen werden. In diesem Fall kann an die Maschinensteuerung, die bevorzugt Teil der erfindungsgemäßen Bearbeitungsvorrichtung ist, zum Beispiel ein Signal "Akku geladen und betriebsbereit" gesendet werden. In diesem Fall weiß dann die Maschinensteuerung, dass das entsprechende Wechselaggregat, welches sich an einem bestimmten Aufnahmeplatz befindet, zur Übergabe an die Motorspindel und damit für die Bearbeitung zur Verfügung steht.

Entsprechend kann bei zu geringer Akku-Ladung ein Signal "Akkukapazität zu gering" als Fehlermeldung an die Maschinensteuerung gesendet werden. Das entsprechende Wechselaggregat steht dann nicht für die Bearbeitung zur Verfügung und muss entweder von der Motorspindel an die Wechselvorrichtung übergeben werden oder wird als nicht betriebsbereit von der Wechselvorrichtung nicht an die Motorspindel übergeben.

Nach einer weiteren Ausführungsform der erfindungsgemäßen Bearbeitungsvorrichtung ist vorgesehen, dass sie eine Datenschnittstelle umfasst, die Betriebsdaten, insbesondere Steuerungsdaten von der Motorspindel und/oder einer Steuerung der Bearbeitungsvorrichtung, an das an der Motorspindel angekoppelte Wechselaggregat, insbesondere berührungslos, überträgt. Auf diese Weise lassen sich unter anderem auch neben Steuerbefehlen, die die Ansteuerung von in der Wechselvorrichtung vorhandenen Antrieben für die Bearbeitung betreffen, auch die oben genannten Signale übertragen, welche den Betriebszustand des Akkus betreffen. So muss nicht zwingend eine Datenübertragung zwischen Motorspindel und Wechselaggregat erfolgen, sondern es kann auch eine Datenschnittstelle eingesetzt werden, die beispielsweise über Bluetooth oder WLAN mit der Maschinensteuerung kommuniziert. Natürlich können auch Motorspindel und Wechselaggregat über eine solche Datenschnittstelle kommunizieren.

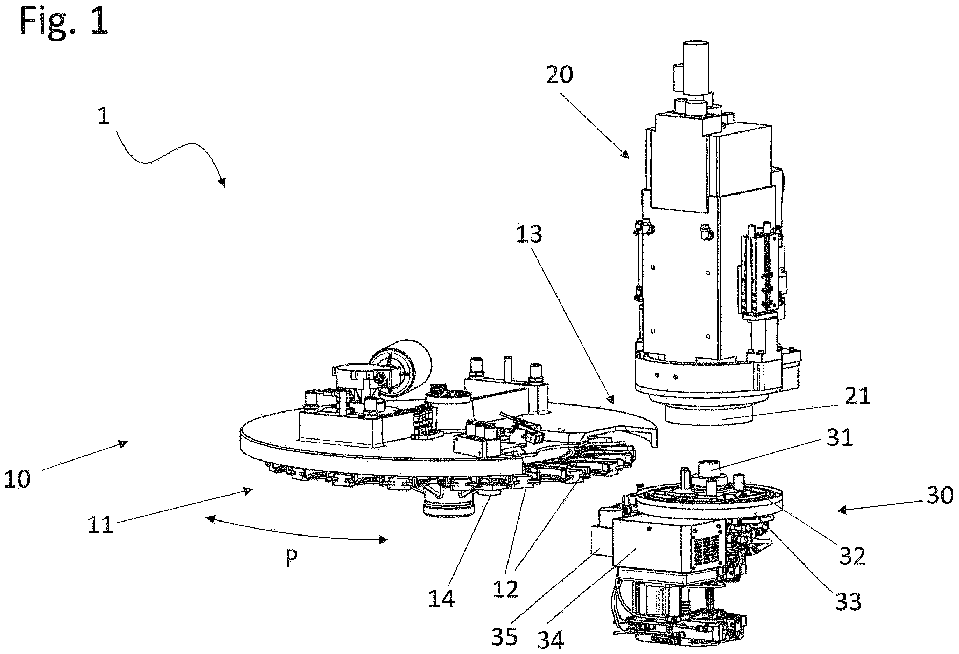

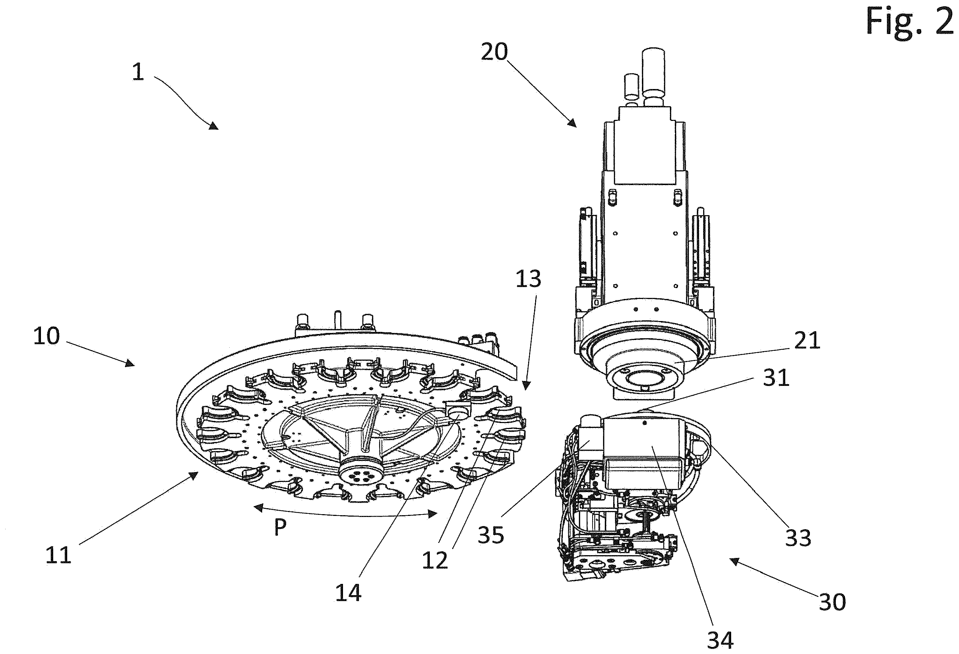

Die Erfindung wird nachfolgend anhand der Figuren 1 und 2 näher erläutert.
Figur 1 zeigt eine Ansicht einer erfindungsgemäßen Bearbeitungsvorrichtung aus einer ersten Perspektive.
Figur 2 zeigt eine Ansicht einer erfindungsgemäßen Bearbeitungsvorrichtung aus einer zweiten Perspektive.

Die in den Figuren 1 und 2 beispielhaft dargestellte erfindungsgemäße Bearbeitungsvorrichtung 1 weist eine Motorspindel 20 und eine Wechselvorrichtung 10 auf. In einer bevorzugten Ausführungsform ist die Wechselvorrichtung 10 als Revolver ausgebildet, welcher eine Revolverscheibe 11 aufweist, die sich in Richtung des Pfeils P bewegen lässt. An der Wechselvorrichtung 10 sind Aufnahmeplätze 12 vorgesehen, an welchen Wechselaggregate 30 aufgenommen werden können. 14 bezeichnet eine Ladevorrichtung, die zum Aufladen eines Akkus ausgebildet ist, welcher sich am Wechselaggregat 30 befindet.

Das Wechselaggregat 30 ist über eine Schnittstelle 31 mit der Schnittstelle 21 der Motorspindel 20 koppelbar. Für die Verdrehsicherung weist das Wechselaggregat 30 bevorzugt Sicherungsabschnitte 32 auf, die in entsprechende Aufnahmen an der Motorspindel im Bereich der dortigen Schnittstelle 21 eintauchen und für eine Verdrehsicherung sorgen. Bevorzugt können zwischen Motorspindel 20 und Wechselaggregat 30 auch Daten übertragen werden, dazu dient eine Datenschnittstelle, die im gezeigten Beispiel mit im Bezugszeichen 33 angedeutet ist. Über diese Datenschnittstelle 33 werden berührungslos Daten entweder von der Motorspindel 20 oder aber auch von einer Steuerung (nicht gezeigt) der Bearbeitungsvorrichtung übertragen, bevorzugt über Bluetooth oder WLAN. Andere Übertragungsarten, z.B. optisch oder dergleichen sind ebenfalls denkbar. Die übertragenen Daten können bevorzugt auch bidirektional übertragen werden, um beispielsweise den Ladezustand des Akkus des an der Motorspindel 20 angekoppelten Wechselaggregats 30 zu bestimmen und an die Maschinensteuerung zu übermitteln. Am Wechselaggregat 30 ist bevorzugt ein Gehäuse, beispielsweise in Gestalt einer Schaltbox 34 angeordnet, die den Akku aufnimmt und überdies auch Elektrik oder Elektronik zur Versorgung der am Wechselaggregat 30 angeordneten Antriebe aufweist. Bezugszeichen 35 bezeichnet eine Kopplungseinrichtung, die mit der Ladevorrichtung 14 in Verbindung gebracht werden kann, um den Akku 34 aufzuladen. Diese Kopplungseinrichtung kann eine Kontakteinrichtung sein, die z. B. einen Schleifring bzw. Schleifkontakt oder einen induktiven Kontakt mit der Ladevorrichtung 14 herstellt. In einer Ausführungsform kann ein Wechselaggregat 30, welches von der Motorspindel 20 an die Wechselvorrichtung 10 im Übergabebereich 13 einem der Aufnahmeplätze 12 übergeben wird, dann über den Kontakt 35 zur Ladevorrichtung 14 aufgeladen werden.

Zur Übergabe werden die Motorspindel 20 und das daran aufgenommene Wechselaggregat 30 in die Nähe der Wechselvorrichtung 10, genauer in die Nähe des Übergabebereich 13 der Wechselvorrichtung 10, verbracht. Dann wird die Kopplung zwischen Motorspindel 20 und Wechselaggregat 30 gelöst und dabei übernimmt die Wechselvorrichtung 10 dieses gelöste Wechselaggregat 30. Dabei wird automatisch der Ladekontakt zwischen der Ladevorrichtung 14 und dem Kontakt 35 hergestellt und der Akku wird aufgeladen. Bevorzugt weist die erfindungsgemäße Bearbeitungsvorrichtung 1 eine Erfassungseinrichtung auf, die den Ladezustand der Akkus erfassen kann, sodass der Maschinensteuerung immer eine Information darüber zur Verfügung steht, welche Wechselaggregate 30 potenziell für eine Bearbeitung zur Verfügung stehen. Genauso kann diese Erfassungseinrichtung natürlich auch ermitteln, ob das an der Motorspindel 20 angekoppelte Wechselaggregat 30 noch über genügend Akkukapazität verfügt, um die für den Bearbeitungsvorgang erforderlichen Verstellbewegungen des Antriebs oder der Antriebe des Wechselaggregats 30 durchführen zu können.

In einer weiteren Ausführungsform kann vorgesehen sein, dass während das Wechselaggregat 30 an der Motorspindel 20 angekoppelt ist und sich in der Bearbeitung befindet, eine Ladevorrichtung 14 an der Wechselvorrichtung 10 einen, bevorzugt induktiven oder schleifenden, Kontakt zu dem Kontakt 35 des Wechselaggregats herstellt, sodass hierüber der Akku des in Benutzung befindlichen Wechselaggregats 30 aufgeladen werden kann.

Selbstverständlich können an der Wechselvorrichtung 10 mehrere Ladevorrichtungen 14 angeordnet sein, sodass gewährleistet ist, dass die Akkus einer erforderlichen Mindestanzahl von Wechselaggregaten 30 gleichzeitig aufgeladen werden können. Auch diese mehreren gleichzeitigen Ladevorgänge können von der Maschinensteuerung bzw. der oben beschriebenen Erfassungseinrichtung überwacht werden.

## Patentansprüche

1. Bearbeitungsvorrichtung (1), insbesondere Holzbearbeitungsvorrichtung, aufweisend:
eine Motorspindel (20) mit einer Schnittstelle (21) zur Aufnahme von Wechselaggregaten (30) zur Durchführung einer Bearbeitung,
eine Wechselvorrichtung (10) mit wenigstens einem Aufnahmeplatz (12) zur Aufnahme von während der Bearbeitung nicht verwendeten Wechselaggregaten (30), wenigstens ein Wechselaggregat (30) oder eine Mehrzahl Wechselaggregate (30) mit jeweils folgenden Komponenten:
eine Schnittstelle (31) zur Ankopplung an die Schnittstelle (21) der Motorspindel (20);
ein über die Motorspindel (20) anzutreibendes Werkzeug, insbesondere einen Fräskopf,
**dadurch gekennzeichnet,**
**dass** das wenigstens eine Wechselaggregat (30) wenigstens einen Akku aufweist, der elektrisch mit mindestens einem am Wechselaggregat (30) angeordneten Antrieb, der Tast- oder Zustellbewegungen des Wechselaggregats (30) antreibt, verbunden ist und diesen mit Spannung versorgt, und die Wechselvorrichtung (10) weiter wenigstens eine Ladevorrichtung (14) aufweist, mit der der Akku wenigstens eines, insbesondere an einem Aufnahmeplatz (12) aufgenommenen, Wechselaggregats (30) geladen werden kann.

2. Bearbeitungsvorrichtung (1) nach Anspruch 1,
**dadurch gekennzeichnet,**
**dass** die Wechselvorrichtung (10) als Revolver, Tellerwechsler, Kettenwechsler oder Pick-Up-Wechsler mit einer Mehrzahl daran angeordneter Aufnahmeplätze (12) für Wechselaggregate (30) ausgebildet ist.

3. Bearbeitungsvorrichtung (1) nach einem der vorigen Ansprüche,
**dadurch gekennzeichnet,**
**dass** die Wechselvorrichtung einen Übergabebereich (13) aufweist, zu dem jeder Aufnahmeplatz (12) der Wechselvorrichtung (10) bewegbar ist, um Wechselaggregate (30) zur Aufnahme an die Motorspindel (20) zu übergeben oder zur Aufnahme von der Motorspindel (20) zu übernehmen.

4. Bearbeitungsvorrichtung (1) nach einem der vorigen Ansprüche,
**dadurch gekennzeichnet,**
**dass** das Bearbeitungsaggregat eine elektrische Schalteinrichtung, insbesondere Schaltbox, aufweist, in die der wenigstens eine Akku und/oder den Akku mit dem wenigstens einen Antrieb verbindende Elektrik und/oder Elektronik angeordnet ist.

5. Bearbeitungsvorrichtung (1) nach einem der vorigen Ansprüche,
**dadurch gekennzeichnet,**
**dass** die oder eine weitere Ladevorrichtung so angeordnet ist, dass sie den Akku eines an der Motorspindel (20) aufgenommenen Wechselaggregats (30), insbesondere während des Betriebs des Wechselaggregats (30), bevorzugt durch Induktion oder einen Schleifkontakt, lädt.

6. Bearbeitungsvorrichtung (1) nach einem der vorigen Ansprüche,
**dadurch gekennzeichnet,**
**dass** die Wechselvorrichtung (10) eine Mehrzahl Ladevorrichtungen (14) zum Laden der Akkus einer Mehrzahl an der Wechselvorrichtung (10) aufgenommener Wechselaggregate (30) umfasst.

7. Bearbeitungsvorrichtung (1) nach einem der vorigen Ansprüche,
**dadurch gekennzeichnet,**
**dass** sie eine Erfassungseinrichtung umfasst, welche bestimmt, ob der wenigstens eine Akku einen vorgegebenen Ladezustand aufweist.

8. Bearbeitungsvorrichtung nach einem der vorigen Ansprüche,
**dadurch gekennzeichnet,**
**dass** sie eine Datenschnittstelle umfasst, die Betriebsdaten, insbesondere Steuerungsdaten von der Motorspindel (20) und/oder einer Steuerung der Bearbeitungsvorrichtung, an das an der Motorspindel (20) angekoppelte Wechselaggregat (30), insbesondere berührungslos, überträgt.
